Europäisches Patentamt

European Patent Office

Office européen des brevets

(19)

(11) Veröffentlichungsnummer : **0 350 712 B1**

(12) **EUROPÄISCHE PATENTSCHRIFT**

(45) Veröffentlichungstag der Patentschrift :
**19.08.92 Patentblatt 92/34**

(51) Int. Cl.[5] : **G01F 1/84**

(21) Anmeldenummer : **89111716.0**

(22) Anmeldetag : **27.06.89**

(54) **Verfahren zur Messung des Massestroms eines Mediums und Vorrichtung zur Durchführung des Verfahrens.**

(30) Priorität : **15.07.88 DE 3824111**

(43) Veröffentlichungstag der Anmeldung :
**17.01.90 Patentblatt 90/03**

(45) Bekanntmachung des Hinweises auf die
Patenterteilung :
**19.08.92 Patentblatt 92/34**

(84) Benannte Vertragsstaaten :
**CH DE FR GB LI NL**

(56) Entgegenhaltungen :
**EP-A- 0 282 217**
**FR-A- 2 598 801**

(73) Patentinhaber : **Fischer & Porter GmbH**
**Postfach 701 Dransfelder Strasse 2**
**W-3400 Göttingen (DE)**

(72) Erfinder : **Ricken, Hans-Martin, Dr.**
**Prinzenstrasse 14**
**W-3400 Göttingen (DE)**

(74) Vertreter : **Fincke, Karl Theodor, Dipl.-Phys. Dr.**
**et al**
**Patentanwälte H. Weickmann, Dr. K. Fincke**
**F.A. Weickmann, B. Huber Dr. H. Liska, Dr. J.**
**Prechtel Kopernikusstrasse 9 Postfach86 08**
**20**
**W-8000 München 86 (DE)**

**Beschreibung**

Die Erfindung betrifft ein Verfahren nach dem Oberbegriff des Anspruchs 1 und eine Vorrichtung zur Durchführung des Verfahrens.

Nach der EP-A-0263 719 ist es bekannt, zwei parallel zueinander verlaufende Rohre in einer ihre beiden Achsen enthaltenden Ebene in gegensinnige Schwingungen zu versetzen und die Phasen dieser Schwingungen beidseitig der in der Mitte der Längsrichtung der Rohre liegenden Maximalamplituden der Schwingungen miteinander zu vergleichen, um den Massestrom des durch beide Rohre strömenden Mediums zu ermitteln.

Nach der FR-A-2 598 801 ist es bekannt, ein an seinen beiden Enden eingespanntes Meßrohr im Mittelbereich von einander gegenüberliegenden Seiten periodisch zusammenzudrücken und freizugeben. Die sich daraus ergebenden Verformungen des Meßrohrs beidseitig seines Mittelbereichs werden gemessen und miteinander verglichen. Aus dem Vergleich wird ein Signal abgeleitet, das dem Massestrom des das Meßrohr durchströmenden Mediums entspricht.

Aufgabe der Erfindung ist es, ein Verfahren und eine Vorrichtung dieser Art anzugeben, die im Meßergebnis möglichst frei von ihnen von außen aufgezwungenen Vibrationen sind.

Die Lösung dieser Aufgabe ist in Anspruch 1 bzw. Anspruch 4 angegeben.

In der Auswerteschaltung wird im wesentlichen aus der Differenz der relativen Phasen das Meßwertsignal abgeleitet.

Zur Korrektur und Eichung werden bevorzugt auch noch die Größen nach Anspruch 2 und 3 verwendet.

Eine besonders stabile Vorrichtung ist in Anspruch 4 angegeben.

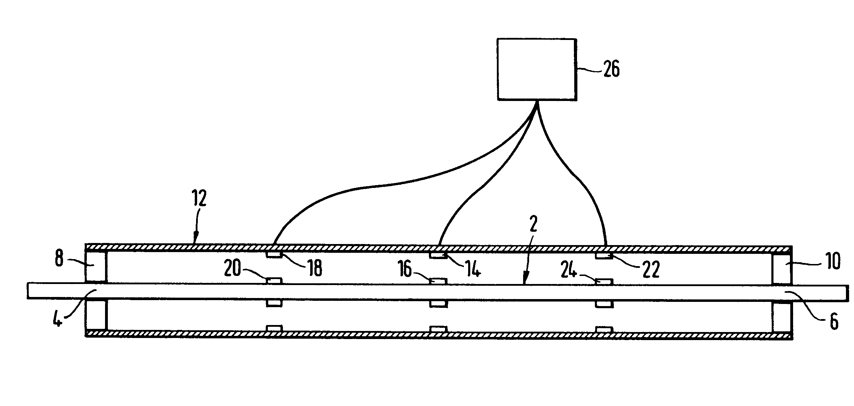

Die Erfindung wird im folgenden an einem Ausführungsbeispiel unter Hinweis auf die beigefügte Zeichnung beschrieben.

In der Zeichnung ist ein Meßrohr 2 dargestellt, das an zwei in Abstand voneinander liegenden Stellen 4 und 6 mittels Einspanngliedern 8 und 10 koaxial in den Enden eines Trägerrohrs 12 eingespannt ist, dessen Masse groß gegenüber der Masse des Meßrohrs 2 ist. Beide Rohre 2 und 12 sind gerade. In der Mitte zwischen den Einspannstellen 4 und 6 befinden sich am Meßrohr 2 und im Trägerrohr 12 in Wechselwirkung zu bringende Erregerelemente 14 und 16, mittels denen das Meßrohr 2 innerhalb des Trägerrohrs 12 in Drehschwingungen um die Achse des im Ruhezustand befindlichen Meßrohrs 2 zu versetzen sind. Zwischen den Erregerelementen 14, 16 und den Einspannstellen 4 und 6 sind mittig miteinander in Wechselwirkung zu bringende Sensorelemente 18, 20, 22, 24 auf dem Meßrohr 2 bzw. in dem Trägerrohr 12 angeordnet. Die Sensorelemente 18, 20 erfassen eine zu einer festen Bezugsphase relative Phase der Drehschwingungen des Meßrohrs, und Gleiches tun die Sensorelemente 22, 24. Die entsprechenden Meßwerte gelangen in eine Auswerteschaltung 26 und werden dort zu einem Signal verarbeitet, das dem Massestrom eines das gerade Meßrohr 2 durchströmenden Mediums entspricht. Im wesentlichen wird in der Auswerteschaltung 26 die Differenz zwischen den relativen Phasen gebildet.

Die Sensorelemente 18, 20 bzw. 22, 24 erfassen überdies die relativen radialen Amplituden des Meßrohrs 2 an den Stellen, an denen sie angebracht sind und führen auch entsprechende Meßwerte der Auswerteschaltung 26 zu. Überdies wird der Auswerteschaltung ein der Erregung der Erregerelemente 14, 16 entsprechendes Signal zugeführt.

Vibrationen der Vorrichtung, die zwischen Relativbewegungen der Sensorelemente 18, 20 und 22, 24 zum Schwerpunkt des ruhenden Meßrohrs 2 führen, oder zusätzliche nicht durch die Drehschwingungen hervorgerufene Verbiegungen des Meßrohrs 2 oder des Trägerrohrs 12 modulieren zwar das dem Massestrom entsprechende Meßwertsignal, eine Mittelung über mehrere Drehschwingungen, somit über die erfaßten relativen Phasen, liefert aber ein von solchen Störungen praktisch unabhängiges, dem Massestrom entsprechendes Meßwertsignal.

Die Erregerelemente 14, 16 brauchen nicht in der Mitte zwischen den Einspannstellen 4, 6 zu liegen, wenn dies auch zweckmäßig ist. Gleiches gilt für die Mittellage der Sensorelemente 18, 20 bzw. 22, 24 zwischen den Erregerelementen 14, 16 und den Einspannstellen 4, 6.

Die Sensorelemente 18, 20 und 22, 24 erfassen die relativen Phasen bevorzugt in einem Winkelabstand von 90°, wenngleich auch dies nicht notwendig ist.

Die die Phasendifferenz an den Meßstellen 18, 20 und 22, 24 erzeugende Corioliskraft ist proportional der Umlaufgeschwindigkeit $v_u$ des Meßrohrs 2. Da $v_u = w*r$, wobei w die Winkelgeschwindigkeit und r die Amplitude der Drehschwingung des Meßrohrs 2 ist, wird die Amplitude r der Drehschwingung konstant gehalten und w gemessen. Da sich die Winkelgeschwindigkeit w mit dem Massedurchfluß ändert, kann mit dem Verfahren zusätzlich die Dichte des Mediums bestimmt werden.

Bei konstanter Amplitude r der Drehschwingung ist der Massefluß proportional der Winkelgeschwindigkeit w. In der Auswerteeinrichtung wird also das Phasendifferenzsignal durch die gemessene Winkelgeschwindigkeit w geteilt, um auf einen von ihr unabhängigen Wert zu kommen.

**Patentansprüche**

1. Verfahren zur Messung des Massestroms eines ein gerades Meßrohr (2) durchströmenden, insbesondere flüssigen, Mediums, bei dem das Meßrohr (2) an zwei in Abstand voneinander liegenden Einspannstellen (4, 6) ortsfest eingespannt wird, bei dem an einer zwischen diesen Einspannstellen (4, 6) liegenden Erregungsstelle (bei 14, 16) das Meßrohr (2) mittels Erregerelementen (14, 16) zu eine Umlaufgeschwindigkeit ($v_u$) aufweisenden Drehschwingungen einer bestimmten Winkelgeschwindigkeit (w) um die Achse des im Rubestand befindlichen Meßrohrs (2) angeregt wird, bei dem je eine zu einer festen Bezugsphase relative Phase der Drehschwingungen des Meßrohrs (2) mittels Sensorelementen (18, 20; 22, 24) an zwei Meßstellen (bei 18, 20 und bei 22, 24) gemessen wird, von denen die eine (bei 18, 20) zwischen der Erregungsstelle (bei 14, 16) und der einen Einspannstelle (4) liegt und die andere zwischen der Erregungsstelle (bei 14, 16) und der anderen Einspannstelle (6) liegt und bei dem aus den den relativen Phasen entsprechenden Meßwerten in einer Auswerteschaltung (26) nach Mittelung über mehrere Drehschwingungen ein dem Massestrom entsprechendes Meßwertsignal abgeleitet wird.

2. Verfahren nach Anspruch 1, bei dem, überdies die relativen radialen Amplituden des Meßrohrs (2) an den Meßstellen (bei 18, 20 und bei 22, 24) gemessen und diesen relativen radialen Amplituden entsprechende Meßwerte der Auswerteschaltung (26) zugeführt werden.

3. Verfahren nach Anspruch 1 oder 2, bei dem, daß der Auswerteschaltung (26) überdies ein der Erregungsfrequenz entsprechendes Signal zugeführt wird.

4. Vorrichtung zur Durchführung des Verfahrens nach einem der vorstehenden Ansprüche, bei der das Meßrohr (2) in ein es im Ruhezustand koaxial umschließendes Trägerrohr (12) eingespannt ist, dessen Masse groß gegenüber der Masse des Meßrohrs (2) ist, und bei der miteinander in Wechselwirkung zu bringende Erregerelemente (14, 16) an der Erregungsstelle (bei 14, 16) und Sensorelemente (18, 20; 22, 24) an den Meßstellen (bei 18, 20, bei 22, 24) an der Außenseite des Meßrohrs (2) und der Innenseite des Trägerrohrs (12) angebracht sind, wobei die Erregerelemente (14,16) so angeordnet sind, daß sie die Drehschwingungen des Meßrohrs (2) um die Achse des im Rubestand befindlichen Meßrohrs (2) erzengen.


**Claims**

1. A method of measuring the mass flow of a medium, in particular a fluid medium, flowing through a straight measuring tube (2), wherein the measuring tube (2) is clamped in position at two clamping points (4, 6) arranged spaced apart, wherein at an excitation point (at 14, 16) situated between these two clamping points (4, 6) the measuring tube (2) is excited by means of excitation elements (14, 16) to undergo torsional vibrations of a given angular velocity (w) and having a rotational speed ($v_u$) about the axis of the measuring tube (2) situated in the rest condition, wherein a respective phase, relative to a fixed reference phase, of the torsional vibrations of the measuring tube (2) is measured by means of sensor elements (18, 20; 22, 24) at two measurement points (at 18, 20 and at 22, 24), one of which (at 18, 20) is situated between the excitation point (at 14, 16) and one clamping point (4) and the other one of which is situated between the excitation point (at 14, 16) and the other clamping point (6), and wherein a signal of the measured value corresponding to the mass flow is derived in an evaluation circuit (26) from the measured values corresponding to the relative phases, after averaging a plurality of torsional vibrations.

2. A method according to Claim 1, wherein, moreover, the relative radial amplitudes of the measuring tube (2) are measured at the measurement points (at 18, 20 and at 22, 24) and measured values corresponding to these relative radial amplitudes are fed to the evaluation circuit (26).

3. A method according to Claim 1 or 2, wherein, moreover, a signal corresponding to the excitation frequency is fed to the evaluation circuit (26).

4. An apparatus for carrying out the method according to any one of the preceding Claims, wherein the measuring tube (2) is clamped in a support tube (12) which surrounds it coaxially in the rest condition and the mass of which is large in relation to the mass of the measuring tube (2), and wherein excitation elements (14, 16) to be brought into interaction with one another at the excitation point (at 14, 16) and sensor elements (18, 20; 22, 24) at the measurement points (at 18, 20, at 22, 24) are applied to the outside of the measuring tube (2) and to the inside of the support tube (12), the excitation elements (14, 16) being so arranged that they induce the torsional vibrations of the measuring tube (2) about the axis of the measuring tube (2) situated in the rest condition.

EP 0 350 712 B1

**Revendications**

1. Procédé pour mesurer le débit massique d'un fluide, notamment liquide, parcourant un tube rectiligne de mesurage (2), dans lequel le tube de mesurage (2) est enserré, de manière fixe, en deux zones d'enserrement (4, 6) distantes l'une de l'autre ; dans lequel, en une zone d'excitation (en 14, 16) située entre ces zones d'enserrement (4, 6), le tube de mesurage (2) est excité, au moyen d'éléments excitateurs (14, 16), en des vibrations rotatoires présentant une vitesse périphérique ($v_u$) et une vitesse angulaire déterminée (w) autour de l'axe dudit tube de mesurage (2) se trouvant au repos ; dans lequel une phase considérée des vibrations rotatoires du tube de mesurage (2), relative à une phase de référence fixe, est mesurée au moyen d'éléments détecteurs (18, 20 ; 22, 24), en deux zones de mesurage (en 18, 20 et en 22, 24) dont l'une (en 18, 20) se trouve entre la zone d'excitation (en 14, 16) et l'une (4) des zones d'enserrement, et l'autre se trouve entre la zone d'excitation (en 14, 16) et l'autre zone d'enserrement (6) ; et dans lequel, sur la base des valeurs mesurées correspondant aux phases relatives, un signal de valeur mesurée correspondant au débit massique est dérivé, dans un circuit d'interprétation (26), après formation d'une moyenne concernant plusieurs vibrations rotatoires.

2. Procédé selon la revendication 1, dans lequel, de surcroît, les amplitudes radiales relatives du tube de mesurage (2) sont mesurées aux zones de mesurage (en 18, 20 et en 22, 24), puis des valeurs mesurées correspondant à ces amplitudes radiales relatives sont appliquées au circuit d'interprétation (26).

3. Procédé selon la revendication 1 ou 2, dans lequel, de surcroît, un signal correspondant à la fréquence d'excitation est appliqué au circuit d'interprétation (26).

4. Appareil pour la mise en oeuvre du procédé selon l'une des revendications précédentes, dans lequel le tube de mesurage (2) est enserré dans un tube de support (12) qui l'entoure coaxialement au repos, et dont la masse est grande comparativement à la masse du tube de mesurage (2) ; et dans lequel des éléments excitateurs (14, 16) et des éléments détecteurs (18, 20 ; 22, 24), devant être mis en interaction, sont respectivement implantés dans la zone d'excitation (en 14, 16) et aux zones de mesurage (en 18, 20, en 22, 24), à la face externe du tube de mesurage (2) et à la face interne du tube de support (12), les éléments excitateurs (14, 16) étant agencés de telle sorte qu'ils engendrent les vibrations rotatoires du tube de mesurage (2) autour de l'axe de ce tube de mesurage (2) se trouvant au repos.

4